# EUROPEAN PATENT APPLICATION

(11) **EP 4 087 041 A1**
(43) Date of publication of application: **09.11.2022**
(21) Application number: 21872688.3
(22) Date of filing: 23.07.2021
(51) Int. Cl.: H01M 50/20

(54) **BATTERY MODULE AND MANUFACTURING METHOD THEREFOR**

(30) Priority: 22.09.2020 KR 20200122295; 20.07.2021 KR 20210094713
(71) Applicant: LG Energy Solution, Ltd., Seoul 07335 (KR)
(72) Inventor: LEE, Chan Kyu, Daejeon 34122 (KR)
(74) Representative: Plasseraud IP
(86) International application number: PCT/KR2021/009588
(87) International publication number: WO 2022/065655

(57) **Abstract**

The battery module according to one embodiment of the present disclosure includes a battery cell stack in which a plurality of battery cells are stacked; a first L-shaped frame that houses the battery cell stack and is formed of an upper surface and a first side surface; and a second L-shaped frame that houses the battery cell stack and is formed of a lower surface and a second side surface, wherein the first L-shaped frame and the second L-shaped frame surround four surfaces of the battery cell stack, a protrusion portion is formed in either one of the first and second L-shaped frames, a groove portion is formed at a position corresponding to the protrusion portion in the other of the frames, and the first and second L-shaped frames are coupled by engaging the protrusion portion and the groove portion.

## Description

### [TECHNICAL FIELD]

### Cross Citation with Related Application(s)

This application claims the benefit of Korean Patent Application No. 10-2020-0122295 filed on September 22, 2020 and Korean Patent Application No. 10-2021-0094713 filed on July 20, 2021 in the Korean Intellectual Property Office, the disclosures of which are incorporated herein by reference in their entirety.

The present disclosure relates to a battery module and a method for manufacturing the same, and more particularly, to a battery module that is easy to assemble, and a method for manufacturing the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of battery cells first, and then configure a battery pack by using at least one of the battery modules and adding other components.

The battery module includes a battery cell stack in which a plurality of battery cells are stacked, and a module frame for housing the battery cell stack.

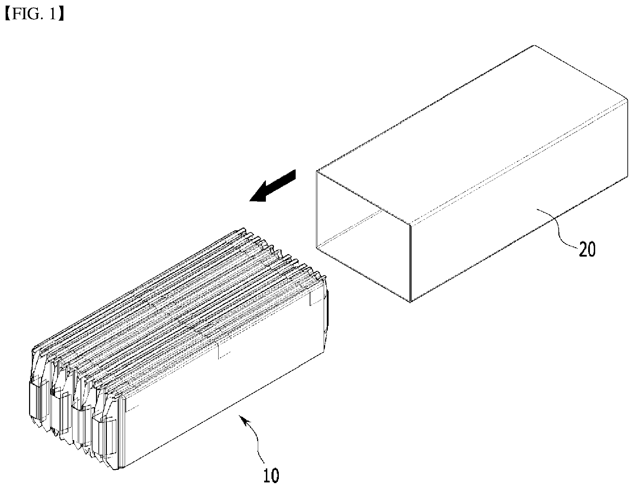

Fig. 1 is a diagram showing a state in which a battery cell stack is assembled into a conventional module frame formed of upper, lower, left and right surfaces.

Referring to Fig. 1, a conventional battery module may include a battery cell stack 10 in which a plurality of battery cells are stacked, and a mono frame 20 which houses the battery cell stack and is formed of the upper, lower, left and right surfaces.

At this time, the battery cell stack 10 has to be inserted inside the mono frame 20, and friction and pressure may occur between the battery cell stack 10 and the inner surface of the mono frame 20. Thus, there is a problem that difficulty in assembling between the battery cell stack 10 and the mono frame 20 is remarkably high.

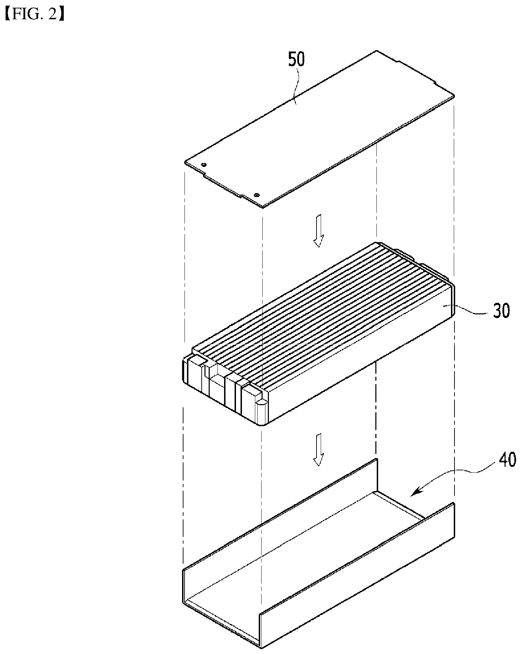

Fig. 2 is a diagram showing a state in which a battery cell stack is assembled in a conventional module frame formed of a U-shaped frame.

Referring to Fig. 2, the conventional battery module may include a battery cell stack 30 in which a plurality of battery cells are stacked, a U-shaped frame 40 for housing the battery cell stack 30 and an upper plate 50 for covering the upper surface of the battery cell stack 30.

At this time, in order to insert the battery cell stack 30 into the U-shaped frame 40, process steps of spreading both side surface portions of the U-shaped frame 40 to both sides, inserting the battery cell stack 30 between the spread both side surface portions, and pressing the spread both side surface portions apart again after inserting the battery cell stack 30 may be required. Cumulative stress may occur in the U-shaped frame 40 while going through the process steps as described above.

Further, the upper plate 50 and the U-shaped frame 40 are coupled to each other by welding, but the welding portion of the U-shaped frame 40 is located at the upper end of both side surface portions. Thus, when a swelling phenomenon occurs from a plurality of battery cells of the battery cell stack 30, stress concentration may occur and the coupling between the U-shaped frame 40 and the upper plate 50 may be released, and the U-shaped frame 40 is likely to be damaged.

### [DETAILED DESCRIPTION OF THE INVENTION]

### [Technical Problem]

It is an object of the present disclosure to provide a battery module having improved assembling properties and a method for manufacturing the same.

The objects of the present disclosure are not limited to the aforementioned objects, and other objects which are not described herein should be clearly understood by those skilled in the art from the following detailed description.

### [Technical Solution]

In order to achieve the above object, according to one embodiment of the present disclosure, there is provided a battery module comprising: a battery cell stack in which a plurality of battery cells are stacked; a first frame that houses the battery cell stack and includes an upper surface for covering an upper portion of the battery cell stack; and a first frame that houses the battery cell stack and includes a lower surface for covering a lower portion of the battery cell stack, wherein a protrusion portion is formed in either one of the first frame and the second frame, a groove portion is formed at a position corresponding to the protrusion portion in the other of the frame, and the first and second frames are coupled by engaging the protrusion portion and the groove portion.

A first raised portion gently protruding downward may be formed in a side end edge of the upper surface of the first frame so as to engage with the second frame, and a second raised portion gently protruding upward may be formed in a side end edge of the lower surface of the second frame so as to engage with the first frame.

The protrusion portion may be formed on the raising surface of the first and second raised portions.

In order to achieve the above object, according to another embodiment of the present disclosure, there is provided a battery module comprising: a battery cell stack in which a plurality of battery cells are stacked; a first L-shaped frame that houses the battery cell stack and is formed of an upper surface and a first side surface; and a second L-shaped frame that houses the battery cell stack and is formed of a lower surface and a second side surface, wherein the first L-shaped frame and the second L-shaped frame surround four surfaces of the battery cell stack, a protrusion portion is formed in either one of the first and second L-shaped frames, a groove portion is formed at a position corresponding to the protrusion portion in the other of the frames, and the first and second L-shaped frames are coupled by engaging the protrusion portion and the groove portion.

A first raised portion gently protruding downward may be formed in a side end edge of the upper surface of the first L-shaped frame so as to engage with the upper end portion of the second side surface of the second L-shaped frame, and a second raised portion gently protruding upward may be formed in a side end edge of the lower surface of the second L-shaped frame so as to engage with the lower end portion of the first side surface of the first L-shaped frame.

A protrusion portion may be formed on the raising surface of the first and second raised portions, and a groove portion may be formed on the upper end portion of the second side surface and the lower end portion of the first side surface, and the first and second L-shaped frames may be coupled while the protrusion portion and the groove portion are coupled.

The protrusion portion may be formed protrusively at the outer edge portion of the raising surface of the first and second raised portions.

The protrusion portion may be formed at the center and both sides of the first and second raised portions, respectively, and the groove portion may be formed at positions corresponding to the respective protrusion portions.

A lower surface of the first raised portion and an upper end surface of the second side surface, and an upper surface of the second raised portion and a lower end surface of the first side surface may be joined by welding, respectively.

In order to achieve the above object, according to yet another embodiment of the present disclosure, there is provided a method for manufacturing a battery module comprising the steps of: inserting a battery cell stack into a second L-shaped frame toward a second side surface; coupling the first L-shaped frame with the second L-shaped frame to cover the battery cell stack; and coupling the first L-shaped frame and the second L-shaped frame by welding.

Before the step of inserting the battery cell stack into the second L-shaped frame, the method may further include a step of attaching a compression pad to both side surfaces of the battery cell stack.

In the step of inserting the battery cell stack into the second L-shaped frame, the battery cell stack may be inserted into the second L-shaped frame while the compression pad being pressed by the second side surface.

The battery module may be included in a battery pack according to a further embodiment of the present disclosure.

### [ADVANTAGEOUS EFFECTS]

A battery module and a method for manufacturing the same according to one embodiment of the present disclosure employ the assembly structure of two L-shaped frames, thereby providing the effect capable of improving assembling properties of the frame structure, strengthening the durability and enabling common use between the two L-shaped frames.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a state in which a battery cell stack is assembled into a conventional module frame formed of upper, lower, left and right surfaces;
Fig. 2 is a diagram showing a state in which a battery cell stack is assembled in a conventional module frame formed of a U-shaped frame;
Fig. 3 is an exploded perspective view of a battery module according to one embodiment of the present disclosure;
Fig. 4 is a diagram showing the structure of the first and second L-shaped frames according to one embodiment of the present disclosure;
Fig. 5 is a diagram showing a state in which the battery cell stack is assembled into the second L-shaped frame in accordance with one embodiment of the present disclosure;
Fig. 6 is a diagram showing a state in which the first L-shaped frame is assembled in the state of Fig. 5; and
Fig. 7 is a diagram showing a state in which the first and second L-shaped frames are coupled by welding in the state of Fig. 6.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, constitutional elements, movements, parts or combinations thereof, but it should be understood that they do not preclude a possibility of existence or addition of one or more other features, numbers, steps, movements, constitutional elements, parts or combinations thereof.

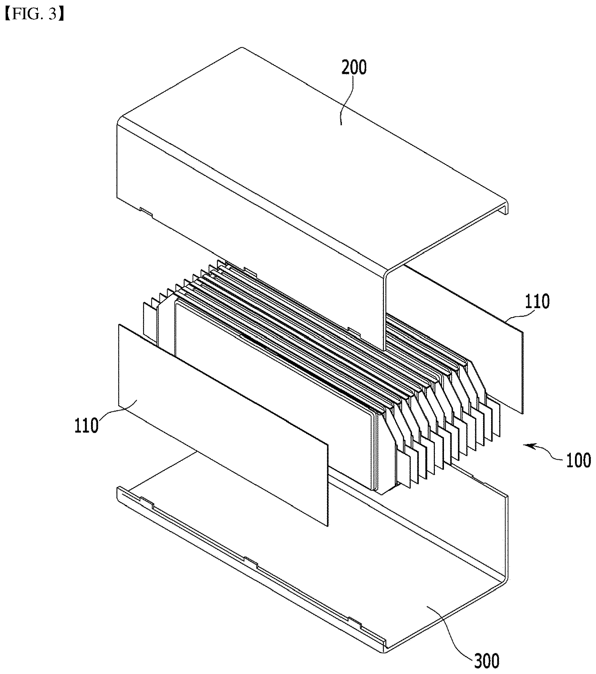

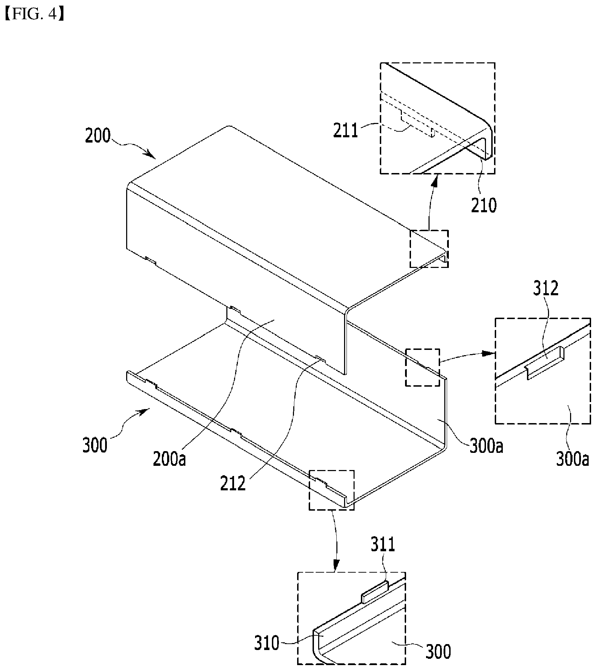

Hereinafter, a battery module according to one embodiment of the present disclosure will be described with reference to Figs. 3 and 4.

Fig. 3 is an exploded perspective view of a battery module according to one embodiment of the present disclosure. Fig. 4 is a diagram showing the structure of the first and second L-shaped frames according to one embodiment of the present disclosure.

Referring to Figs. 3 and 4, a battery module according to one embodiment of the present disclosure includes a battery cell stack 100 in which a plurality of battery cells are stacked, a first L-shaped frame 200 that houses the battery cell stack 100 and is formed of an upper surface and a first side surface 200a, and a second L-shaped frame 300 that houses the battery cell stack 100 and is formed of a lower surface and a second side surface 300a.

The battery cell is a secondary battery and may be configured into a pouch-type secondary battery. Such a battery cell may be composed of a plurality of cells, and the plurality of battery cells may be stacked together so as to be electrically connected to each other, thereby forming the battery cell stack 100. Each of the plurality of battery cells may include an electrode assembly, a battery case, and an electrode lead protruding from the electrode assembly.

Referring to Fig. 3, compression pads 110 may be attached to both side surfaces of the battery cell stack 100. The swelling of the battery cell stack 100 can be absorbed through the compression pads 110.

According to the present embodiment, the first L-shaped frame 200 and the second L-shaped frame 300 surround four surfaces of the battery cell stack 100, protrusion portions 211 and 311 are formed in either one of the first and second L-shaped frames 200 and 300, groove portions 212 and 312 are formed at positions corresponding to the protrusion portion 211 and 311 in the other of the frames, and the first and second L-shaped frames 200 and 300 are coupled by engaging the protrusion portions 211 and 311 and the groove portions 212 and 312.

When a battery cell stack is inserted into a conventional mono frame structure formed of upper, lower, left, and right surfaces, there was a risk of causing interference between the inner surface of the mono frame and the battery cell stack. Further, when the battery cell stack is inserted into the conventional U-shaped frame structure, the process of spreading and retracting the side surface portions of the U-shaped frame is necessary, which may cause cumulative stress. When the swelling phenomenon of the battery cell stack inserted into the U-shaped frame occurs, stress is concentrated on the weld-coupling portion between the upper side plate and the upper end portion of both side surfaces of the U-shaped frame, there was a risk of damaging the frame structure.

Therefore, according to the embodiments of the present disclosure, the battery cell stack 100 is housed via the two first and second L-shaped frames 200 and 300 structures, whereby it is possible to eliminate another step in which the frame must be spread when inserting the battery cell stack 100. Further, since the battery cell stack 100 can be easily assembled toward the second side surface 300a of the second L-shaped frame 300, the assembling property can be improved as compared with a conventional case.

Further, even if the swelling phenomenon occurs in the state in which the battery cell stack 100 is inserted into the first and second L-shaped frames 200 and 300, the position of the frame coupling portion can made to be located at the frame side surface portion through the raised-portion welding structure or the protrusion-groove coupling structure described later, thereby improving the stress concentration structure due to swelling and thus securing the durability of the frame structure.

Further, in the case of the first and second L-shaped frames 200 and 300, they are formed in a symmetrical structure to each other, so that they can be produced by only one frame structure during frame production and then assembled with each other, thereby realizing common use of frame products.

According to the present embodiment, as shown in Fig. 4, a first raised portion 210 gently protruding downward may be formed in a side end edge of the upper surface of the first L-shaped frame 200 so as to engage with the upper end portion of the second side surface 300a of the second L-shaped frame 200. Further, a second raised portion 310 gently protruding upward may be formed in a side end edge of the lower surface of the second L-shaped frame 300 so as to engage with the lower end portion of the first side surface 200a of the first L-shaped frame 200.

Further, according to the present embodiment, protrusion portions 211 and 311 are formed on the raising surface of the first and second raised portions 210 and 310, and groove portions 212 and 312 are formed on the lower end portion of the first side surface 200a and the upper end portion of the second side surface 300a, and the first and second L-shaped frames 200 and 300 can be coupled while the protrusion portions 211 and 311 and the groove portions 212 and 312 are coupled.

More specifically, the protrusion portion 311, which is formed on the raising surface of the second raised portion 310 formed in the second L-shaped frame 300, can be coupled with the groove portion 212, which is formed on the lower end portion of the first side surface 200a formed in the first L-shaped frame 200. Further, the protrusion portion 211 formed on the raising surface of the first raised portion 210 formed in the first L-shaped frame 200 can be coupled with a groove portion 312 formed on the upper end portion of the second side surface 300a formed in the second L-shaped frame 300.

Referring to Fig. 4, the protrusion portions 211 and 311 may be formed at the center and both sides of the first and second raised portions 210 and 310, and the groove portions 212 and 312 may be formed at positions corresponding to the respective protrusion portions 211 and 311.

However, the protrusion portions 211 and 311 and the groove portions 212 and 312 are not limited to the structure shown in Fig. 4, and the protrusion portions 211 and 311 formed on the respective raised portions may be formed in four or more plural numbers. Further, the plurality of groove portions 212 and 312 may be formed so as to correspond to the protruding positions of the protrusion portions 211 and 311 formed in plural number, respectively. At this time, the positions of the protrusion portions 211 and 311 and the groove portions 212 and 312 may be formed symmetrically about the center of the coupling surface between the frames regardless of the number.

According to the present embodiment, the protrusion portions 211 and 311 may be formed protrusively at the outer edge portions of the raising surfaces of the first and second raised portions 210 and 310. In the portion where the protrusion portions 211 and 311 are formed when a swelling phenomenon of the battery cell stack 100 thus inserted occurs, a double layer structure is formed in which the protrusion portions 211 and 311 and the first and second side surfaces 200a and 300a are coupled so as to overlap each other, so that due to the swelling, it is possible to effectively respond to the force acting on the side surface of the frame in a direction perpendicular to the side surface portion of the frame.

Further, the protrusion portions 211 and 311 are located at the outer side edge of the raising surface, whereby when assembling between the first and second L-shaped frames 200 and 300, the assembly position between the first and second L-shaped frames 200 and 300 can be guided via the protrusion portions 211 and 311, and the first and second L-shaped frames 200 and 300 can assist so as to be coupled to each other at an accurate position.

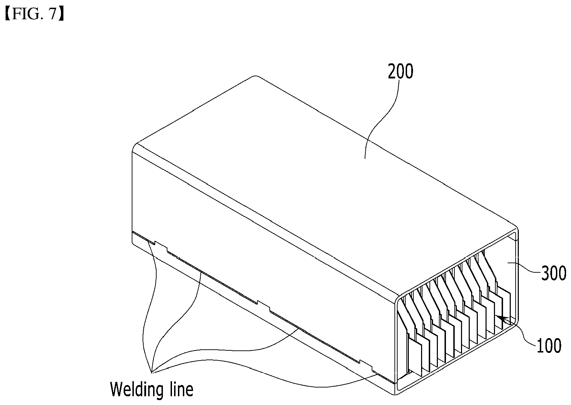

Referring to Figs. 4 and 7, the lower surface of the first raised portion 210 and the upper end surface of the second side surface 300a, and the upper surface of the second raised portion 310 and the lower end surface of the first side surface 200a can be coupled by welding, respectively. Therefore, in addition to the protrusion-groove coupling structure between the protrusion portions 211 and 311 and the groove portions 212 and 312, a weld-coupling structure between the raising surface and the upper and lower end surfaces of the frame can be adopted, so that a double coupling structure can be formed between the first and second L-shaped frames 200 and 300. Thereby, the coupling force between the first and second L-shaped frames 200 and 300 can be strengthened and the durability of the frame structure can be further strengthened.

Meanwhile, in the above, it has been described that the battery module includes the first and second L-shaped frames 200 and 300, the first and second raised portions 210 and 310 are formed in the first and second L-shaped frames 200 and 300, and the two L-shaped frames 200 and 300 are coupled by engaging the protrusion portions 211 and 311 and the groove portions 212 and 312. However, the above-described method of coupling the two L-shaped frames 200 and 300 can also be applied to frames having other shapes.

For example, the frame surrounding the outer surface of the battery cell stack 100 may include two sub-frames, i.e., a first frame and a second frame. Here, the shapes of the first frame and the second frame may be provided in a plate shape, a U shape, or other shapes, and may be provided in various shapes not mentioned herein.

The first frame may include an upper surface that covers the upper portion of the battery cell stack 100, and the second frame may include a lower surface that covers the lower portion of the battery cell stack 100. A protrusion portion is formed in either one of the first frame and the second frame, a groove portion may be formed in the other of the frames, and the first and second frames are coupled by engaging the protrusion portion and the groove portion.

In addition, a first raised portion protruding downward is formed in a side end edge of the upper surface of the first frame, and a second raised portion protruding upward is formed in a side end edge of the lower surface of the second frame. Here, protrusion portions may be formed on the first and second raised portions. A groove portion may be formed in a part of the second frame corresponding to the first raised portion and a part of the first frame corresponding to the second raised portion, whereby the protrusion portion and the groove portion can be engaged with each other.

Therefore, even if swelling occurs in the state in which the battery cell stack 100 is inserted into the first and second frames, the position of the frame coupling portion is made to be located at the side surface portion of the frame through the raised-portion welding structure or the protrusion-groove coupling structure, thereby securing the durability of the frame structure and thus improving the stress concentration structure due to swelling.

On the other hand, the first raised portion, the second raised portion, the protrusion portion and the groove portion include all the contents of the first raised portion 210, the second raised portion 310, the protrusion portions 211 and 311 and the groove portions 212 and 312 described with reference to the above-mentioned drawings and the like, and a detailed description thereof will be omitted to avoid duplicate description.

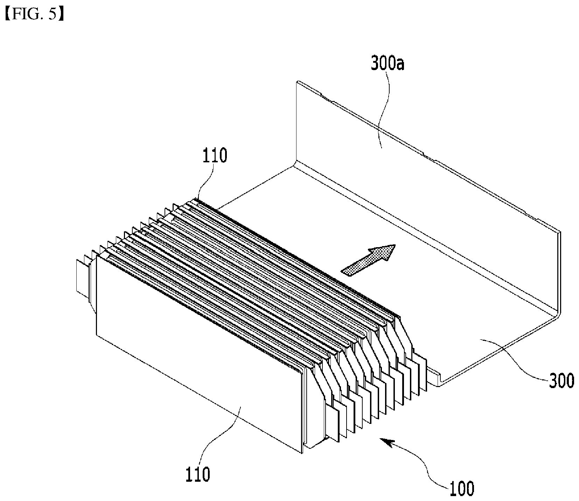

Below, a method of manufacturing a battery module according to one embodiment of the present disclosure will be described with reference to Figs. 5 to 7.

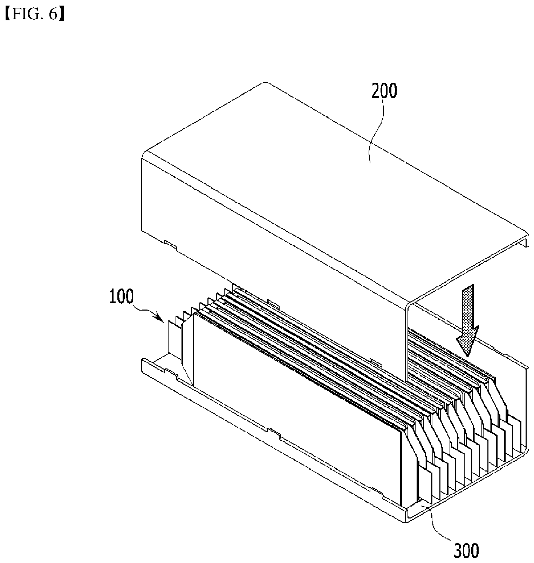

Fig. 5 is a diagram showing a state in which the battery cell stack is assembled into the second L-shaped frame in accordance with one embodiment of the present disclosure. Fig. 6 is a diagram showing a state in which the first L-shaped frame is assembled in the state of Fig. 5. Fig. 7 is a diagram showing a state in which the first and second L-shaped frames are coupled by welding in the state of Fig. 6.

Referring to Figs. 5 to 7, a method for manufacturing a battery module according to one embodiment of the present disclosure includes: a step of inserting a battery cell stack 100 shown in Fig. 5 into a second L-shaped frame 300 toward a second side surface 300a, a step of coupling the first L-shaped frame 200 shown in Fig. 6 with the second L-shaped frame 300 to cover the battery cell stack 100, and a step of coupling the first L-shaped frame 100 and the second L-shaped frame 300 by welding.

As described above, after inserting the battery cell stack 100 toward the second side surface 300a of the second L-shaped frame 300, it is sufficient to cover the first L-shaped frame 200, so that the coupling between the battery cell stack and the frame can be easily performed.

According to the present embodiment, before the step of inserting the battery cell stack 100 into the second L-shaped frame 300, the method further comprises a step of attaching a compression pad 110 to both side surfaces of the battery cell stack 100. The swelling of the battery cell stack 100 is absorbed via the compression pad 110 to help ensure the durability of the frame structure.

Further, according to the present embodiment, in the step of inserting the battery cell stack 100 into the second L-shaped frame 300, the battery cell stack 100 can be inserted into the second L-shaped frame 300 while the compression pad 110 being pressed by the second side surface 300a. When the battery cell stack 100 is inserted into the frame, damage due to collision between the battery cell stack 100 and the frame may occur. Thus, according to the present embodiment, the battery cell stack 100 to which the compression pad 110 is attached is inserted into the inside of the second L-shaped frame 300 toward the second side surface 300a, whereby damage due to collision between the second side surface 300a and the side surface of the battery cell stack 100 can be prevented in advance. That is, the compression pad 110 can perform a buffering function when assembling between the battery cell stack 100 and the second side surface 300a.

The above-mentioned battery module can be included in the battery pack. The battery pack may have a structure in which one or more of the battery modules according to the present embodiment are gathered, and packed together with a battery management system (BMS) and a cooling device that control and manage battery's temperature, voltage, etc.

The battery pack can be applied to various devices. Such a device may be applied to a transportation means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and numerous other modifications and embodiments can be devised by those skilled in the art, without deviating from the spirit and scope of the principles of the invention described in the appended claims. Further, these modified embodiments should not be understood individually from the technical spirit or perspective of the present disclosure.

### [Description of Reference Numerals]

100: battery cell stack
110: compression pad
200: first L-shaped frame
200a: first side surface
210: first raised portion
211: protrusion portion
212: groove portion
300: second L-shaped frame
300a: second side surface
310: second raised portion
311: protrusion portion
312: groove portion

## Claims

1. A battery module comprising:
a battery cell stack in which a plurality of battery cells are stacked;
a first frame that houses the battery cell stack and includes an upper surface for covering an upper portion of the battery cell stack; and
a second frame that houses the battery cell stack and includes a lower surface for covering a lower portion of the battery cell stack,
wherein a protrusion portion is formed in either one of the first frame and the second frame, a groove portion is formed at a position corresponding to the protrusion portion in the other of the frame, and the first and second frames are coupled by engaging the protrusion portion and the groove portion.

2. The battery module according to claim 1, wherein:
a first raised portion gently protruding downward is formed in a side end edge of the upper surface of the first frame so as to engage with the second frame, and
a second raised portion gently protruding upward is formed in a side end edge of the lower surface of the second frame so as to engage with the first frame.

3. The battery module according to claim 2, wherein:
the protrusion portion is formed on the raising surface of the first and second raised portions.

4. A battery module comprising:
a battery cell stack in which a plurality of battery cells are stacked;
a first L-shaped frame that houses the battery cell stack and is formed of an upper surface and a first side surface; and
a second L-shaped frame that houses the battery cell stack and is formed of a lower surface and a second side surface,
wherein the first L-shaped frame and the second L-shaped frame surround four surfaces of the battery cell stack,
a protrusion portion is formed in either one of the first and second L-shaped frames, a groove portion is formed at a position corresponding to the protrusion portion in the other of the frames, and the first and second L-shaped frames are coupled by engaging the protrusion portion and the groove portion.

5. The battery module according to claim 4, wherein:
a first raised portion gently protruding downward is formed in a side end edge of the upper surface of the first L-shaped frame so as to engage with the upper end portion of the second side surface of the second L-shaped frame, and
a second raised portion gently protruding upward is formed in a side end edge of the lower surface of the second L-shaped frame so as to engage with the lower end portion of the first side surface of the first L-shaped frame.

6. The battery module according to claim 5, wherein:
a protrusion portion is formed on the raising surface of the first and second raised portions, and a groove portion is formed on the upper end portion of the second side surface and the lower end portion of the first side surface, and
the first and second L-shaped frames are coupled while the protrusion portion and the groove portion are coupled.

7. The battery module according to claim 6, wherein:
the protrusion portion is formed protrusively at the outer edge portion of the raising surface of the first and second raised portions.

8. The battery module according to claim 6, wherein:
the protrusion portion is formed at the center and both sides of the first and second raised portions, respectively, and
the groove portion is formed at positions corresponding to the respective protrusion portions.

9. The battery module according to claim 5, wherein:
a lower surface of the first raised portion and an upper end surface of the second side surface, and an upper surface of the second raised portion and a lower end surface of the first side surface are joined by welding, respectively.

10. A method for manufacturing a battery module comprising the steps of:
inserting a battery cell stack into a second L-shaped frame toward a second side surface;
coupling the first L-shaped frame with the second L-shaped frame to cover the battery cell stack; and
coupling the first L-shaped frame and the second L-shaped frame by welding.

11. The method according to claim 10, wherein:
before the step of inserting the battery cell stack into the second L-shaped frame, the method further comprises a step of attaching a compression pad to both side surfaces of the battery cell stack.

12. The method according to claim 11, wherein:
in the step of inserting the battery cell stack into the second L-shaped frame, the battery cell stack is inserted into the second L-shaped frame while the compression pad being pressed by the second side surface.

13. A battery pack comprising the battery module as set forth in claim 1.
